# EUROPEAN PATENT SPECIFICATION

(11) **EP 4 535 335 B1**
(45) Date of publication and mention of the grant of the patent: **10.06.2026**
(21) Application number: 23831151.8
(22) Date of filing: 16.06.2023
(51) Int. Cl.: G09B 23/28, G09B 23/30

(54) **TECHNIQUE SIMULATOR AND TECHNIQUE-TRAINING METHOD**
TECHNIKSIMULATOR UND VERFAHREN ZUM TRAINIEREN
SIMULATEUR DE TECHNIQUE ET PROCÉDÉ D'ENTRAÎNEMENT DE TECHNIQUE

(30) Priority: 30.06.2022 JP 2022105699
(43) Date of publication of application: 09.04.2025
(73) Proprietor: Terumo Kabushiki Kaisha, Tokyo 151-0072 (JP)
(72) Inventor: OZAKI, Kouji, Ashigarakami-gun, Kanagawa 259-0151 (JP); HATTORI, Ayumi, Ashigarakami-gun, Kanagawa 259-0151 (JP)
(74) Representative: TBK
(86) International application number: PCT/JP2023/022359
(87) International publication number: WO 2024/004704

(56) References cited:
- WO-A1-2015/146273
- WO-A1-2015/146273
- CN-A- 112 908 074
- JP-A- 2006 317 570
- JP-A- 2017 161 730
- US-A- 4 198 766

## Description

### Technical Field

The present invention relates to a technique simulator and a technique training method used for training in a technique using a catheter.

### Background Art

As a part of minimally invasive endovascular treatment, a technique of inserting a catheter or a sheath into a blood vessel has been widely performed. Such catheter puncture is performed on a site where the burden on the patient is small. For example, in cardiac treatment (and examination) using a catheter, the catheter is often introduced through a radial artery in a wrist (radial artery approach). As an instrument for practicing such a radial artery approach, for example, a technique simulator described in WO 2015/146273 A has been proposed.

In recent years, a distal radial artery approach (dRA) has been proposed as a less invasive method. In the distal radial artery approach, the catheter is introduced further distally (peripherally) than the puncture position in the conventional radial artery approach. The distal radial artery approach has a lower risk of a hemorrhagic complication, a shorter hemostasis time, and less pain than the conventional radial artery approach.

Document WO 2015/146273 A1 is considered closest prior art and discloses a technique simulator having the features of the preamble of claim 1.

Document US 4 198 766 A discloses a similar prior art technique simulator.

### Summary of Invention

However, the distal radial artery approach has not been widely used because puncturing is difficult due to a small diameter of the target blood vessel, and the approach is a new technique and it has not been long since the proposal. In order to further spread the distal radial artery approach, a technique simulator that enables a user to easily experience the distal radial artery approach is required.

The object of the present invention is to solve the aforementioned problems.

The object of the invention is achieved by a technique simulator according to claim 1. Advantageous embodiments are carried out according to the dependent claims.

One aspect of the following disclosure is a technique simulator for training in puncture of a distal radial artery of a human body with a medical instrument, the technique simulator including a model main body which imitates an appearance of a hand and a forearm of the human body, a recess portion which is obtained by cutting out in a recessed shape a part of a dorsal portion of the hand, including a snuffbox, of the model main body, a groove portion which extends to a proximal side from the recess portion of the model main body, a puncture block which is fitted into the recess portion to fill the recess portion, and a blood vessel tube a part of which is inserted in an inside of the puncture block and another part of which is inserted in the groove portion, in which the groove portion is opened outward and enables an inside of the blood vessel tube to be visually recognized from an outside.

Another aspect is a technique training method using the technique simulator according to the aforementioned aspect, the technique training method including a step of checking a position of the blood vessel tube inside the puncture block, a step of puncturing the blood vessel tube with a puncture needle by introducing the puncture needle into a surface of the puncture block, and a step of inserting a guide wire into the blood vessel tube and moving the guide wire forward inside the blood vessel tube arranged in the groove portion.

The technique simulator and the technique training method of the aforementioned aspects enable the user to easily experience the distal radial artery approach, and thus can contribute to the spread of the distal radial artery approach.

In particular, according to the invention, a technique simulator for training in puncture of a distal radial artery of a human body with a medical instrument includes a model main body which imitates an appearance of a hand and a forearm of the human body, a recess portion which is obtained by cutting out in a recessed shape a part of a dorsal portion of the hand, including a snuffbox, of the model main body, a groove portion which extends to a proximal side from the recess portion of the model main body, a puncture block which is fitted into the recess portion to fill the recess portion, and a blood vessel tube a part of which is inserted in an inside of the puncture block and another part of which is inserted in the groove portion, in which the groove portion is opened outward and enables an inside of the blood vessel tube to be visually recognized from an outside.

The puncture block includes two myoid structures that notify a user of positions of two extensor tendons of the hand of the human body.

The blood vessel tube extends at a deeper position than the two simulated extensor tendons imitating the two extensor tendons of the hand of the human body in the puncture block while crossing the two simulated extensor tendons.

In the above technique simulator, it is possible to easily perform training of the distal radial artery approach. In addition, since the technique simulator has the groove portion, the blood vessel tube can be fixed in a stable manner, and an operation of avoiding accidental insertion of a guide wire can be confirmed easily, and, this technique simulator can reproduce a more natural tactile sensation of the extensor tendon.

Moreover, the technique simulator according to the invention may include a syringe which is connected to an end portion of the blood vessel tube on the proximal side and gives pulsation to a liquid filled inside the blood vessel tube. This technique simulator can reproduce the pulsation of the artery with a simple configuration.

Moreover, the technique simulator according to the invention, a width of the groove portion may have a smaller dimension than an outside diameter of the blood vessel tube, and avoid expansion of the blood vessel tube caused by the pulsation by the syringe. This technique simulator can reduce the loss of the internal pressure in the blood vessel tube at the time of pulsation and efficiently transmit the pulsation to the blood vessel tube buried in the puncture block.

In the technique simulator according to the invention, the blood vessel tube may extend in the puncture block so as to cross the two myoid structures. In the above technique simulator, it is possible to accurately reproduce the puncture position in the distal radial artery approach.

The two myoid structures may be arranged to penetrate the puncture block and include the two simulated extensor tendons imitating extensor tendons of the human body.

In the technique simulator according to the invention, the two myoid structures may include two myoid protrusions protruding from a surface of the puncture block, and the blood vessel tube may extend in the puncture block so as to cross the two myoid protrusions. Since the structure of the puncture block of the technique simulator is simplified, attachment work of the simulated extensor tendon can be dispensed with, manufacturing becomes easy, and handling is excellent.

According to the invention, in the technique simulator the blood vessel tube may include a flexible tube and may slidably be inserted through the puncture block. In this technique simulator, a puncture hole can be removed only by cutting a portion provided with the puncture hole and attaching a sealing cap to the cut portion to seal the portion. Therefore, the technique simulator can decrease the frequency of replacement of the blood vessel tube and can reduce the labor required for practice.

In the technique simulator according to the invention, the puncture block may be made of an opaque elastic material that is softer and more elastic than the model main body. This technique simulator can reproduce a similar sense of puncture to that at the actual puncture position.

In the technique simulator according to the invention, the recess portion and the puncture block may each have a half moon shape obtained by cutting out a part of a circular shape in plan view. This technique simulator facilitates positioning when attaching the puncture block to the recess portion and facilitates attachment and detachment of the puncture block. In addition, since the puncture block has a shape obtained by cutting a part of a circle in a straight form in plan view, the puncture block is less likely to be damaged even when the puncture block is removed from the model main body.

In the technique simulator according to the invention, the model main body may include a simulated protrusion protruding from a wrist site to simulate a protrusion of the hand due to a radial styloid process. This technique simulator can cause a trainee to grasp a mark in the distal radial artery approach.

The technique simulator according to the invention may include a table which holds the model main body. In this technique simulator, since the model main body is stable, the trainee can concentrate on the practice of puncture.

A technique training method using the technique simulator according to the invention includes a step of checking a position of the blood vessel tube inside the puncture block, a step of puncturing the blood vessel tube with a puncture needle by introducing the puncture needle into a surface of the puncture block, and a step of inserting a guide wire into the blood vessel tube and moving the guide wire forward inside the blood vessel tube arranged in the groove portion.

In the above technique training method, it is possible to easily perform technique training of the distal radial artery approach. In addition, in the technique practice method, the movement of the guide wire can be understood more deeply by visually recognizing the blood vessel tube along the groove portion, and the operation of avoiding accidental insertion can be confirmed easily.

### Brief Description of Drawings

Fig. 1 is an explanatory view illustrating a radial artery of a hand and a forearm of a human body, a puncture position in a distal radial artery approach, and a puncture position in a conventional radial artery approach.
Fig. 2 is a perspective view of a technique simulator according to a first embodiment.
Fig. 3 is a side view in which a puncture block is removed from a model main body in Fig. 2.
Fig. 4 is a top view of the puncture block in Fig. 2.
Fig. 5 is a perspective view in which simulated extensor tendons and a blood vessel tube are attached to the puncture block in Fig. 2.
Fig. 6A is a cross-sectional view illustrating puncture of the blood vessel tube with a puncture needle by an echo guide method in a training method using the technique simulator in Fig. 2, and Fig. 6B is a cross-sectional view illustrating an operation of moving a guide wire forward inside the blood vessel tube in the training method using the technique simulator in Fig. 2.
Fig. 7 is a top view of a puncture block according to a second embodiment.
Fig. 8 is a cross-sectional view taken along line VIII-VIII in the puncture block in Fig. 7.

### Description of Embodiments

Prior to description of embodiments, the position of a radial artery in a human body and the puncture position in the distal radial artery approach will be described.

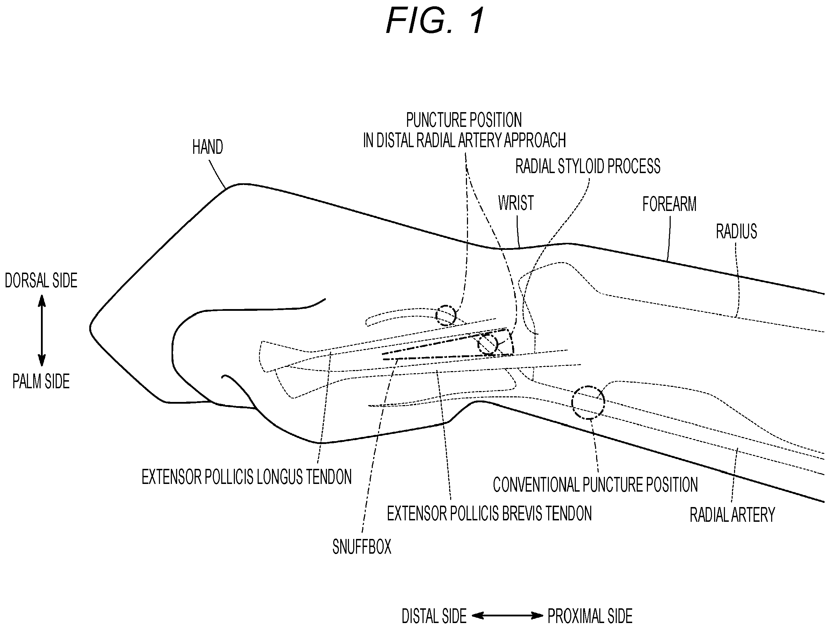

As illustrated in Fig. 1, the radial artery is an artery that branches from the brachial artery (not illustrated) and runs along the radius in the forearm. The radial artery runs in a shallow portion close to the skin on the palm side and the thumb side near the wrist. This portion is a portion to be touched with a finger when taking a pulse. The puncture position in the conventional radial artery approach is located slightly to the proximal side of the radial artery near the wrist.

The distal side (peripheral side) of the radial artery passes through a site called a snuffbox (anatomical snuffbox or tabatiere) and goes to the dorsal side of the hand as illustrated in the figure. The snuffbox is a portion of a depression that appears from the wrist joint to a portion near the base of the thumb when the thumb is bent outward.

The snuffbox is a triangular region formed between a portion raised by the extensor pollicis longus tendon located on the dorsal side (back side) of the hand and a portion raised by the extensor pollicis brevis tendon located on the edge side of the hand, and tapered toward the fingertip side. There is a protrusion due to the radial styloid process on the proximal side of the snuffbox. The radial styloid process is one of marks for the puncture position in the distal radial artery approach.

At the snuffbox, the radial artery extends in a deeper portion than the extensor pollicis longus tendon and the extensor pollicis brevis tendon while crossing the extensor pollicis longus tendon and the extensor pollicis brevis tendon. The puncture position in the distal radial artery approach is the radial artery passing through the snuffbox or the radial artery slightly distal to the snuffbox.

### First Embodiment

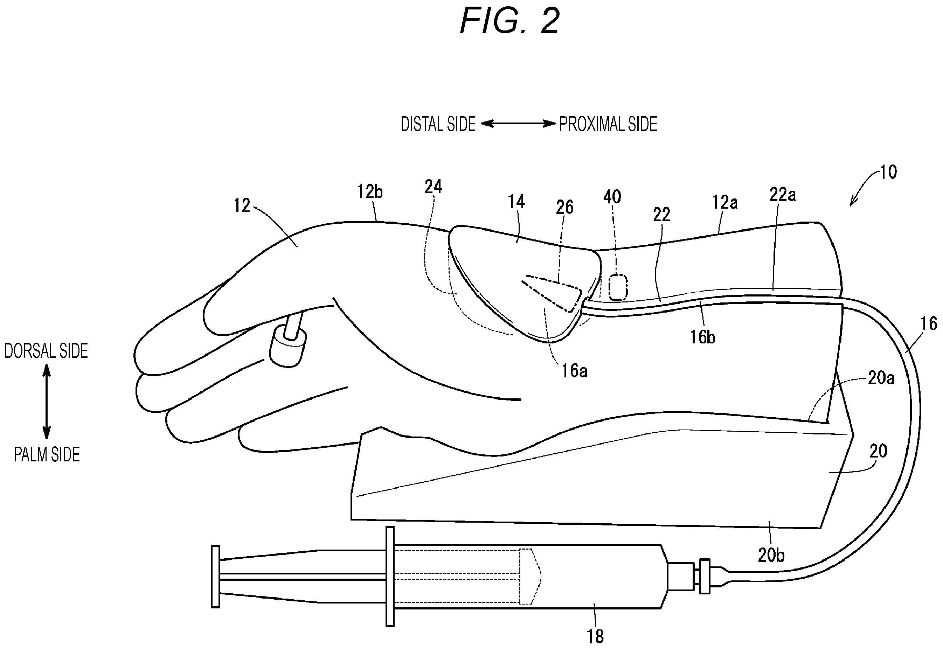

Hereinafter, a technique simulator 10 according to an embodiment will be described. As illustrated in Fig. 2, the technique simulator 10 according to the present embodiment is used for practice of puncturing a puncture position in the distal radial artery approach with a catheter using a model main body 12 imitating a part of a forearm 12a and a hand 12b.

As illustrated, the technique simulator 10 includes the model main body 12, a puncture block 14, a blood vessel tube 16, a syringe 18, and a table 20. The model main body 12 has an outer shape imitating the hand 12b of a human body and a part of the forearm 12a on the distal side. The model main body 12 is integrally formed using a resin material.

The model main body 12 further includes a groove portion 22 and a recess portion 24. The groove portion 22 is a recessed groove extending in the extending direction of the hand 12b (proximal and distal directions). The groove portion 22 extends to both the proximal side and the distal side of the recess portion 24, and houses and holds the blood vessel tube 16 protruding from the recess portion 24 to the proximal side and the distal side. The groove portion 22 has a dimension (width) in a direction orthogonal to the center line in the extending direction smaller than the outside diameter of the blood vessel tube 16, and the blood vessel tube 16 is tightly held so as to be pressed from the width direction and inserted in the groove portion 22. The blood vessel tube 16 is made of a member having transparency. The blood vessel tube 16 is held by the groove portion 22 so as not to move out of the groove portion 22. The groove portion 22 is opened outward (upward) and facilitates visual recognition of the inside of the blood vessel tube 16 from above. In the blood vessel tube 16, a portion held in the groove portion 22 when the model is used is referred to as a visible portion 16b, and a portion buried in the puncture block 14 is referred to as a buried portion 16a. Note that the buried portion 16a and the visible portion 16b do not represent specific positions in the blood vessel tube 16 itself, and are merely defined by the relationship of the blood vessel tube 16 with the groove portion 22 and the puncture block 14.

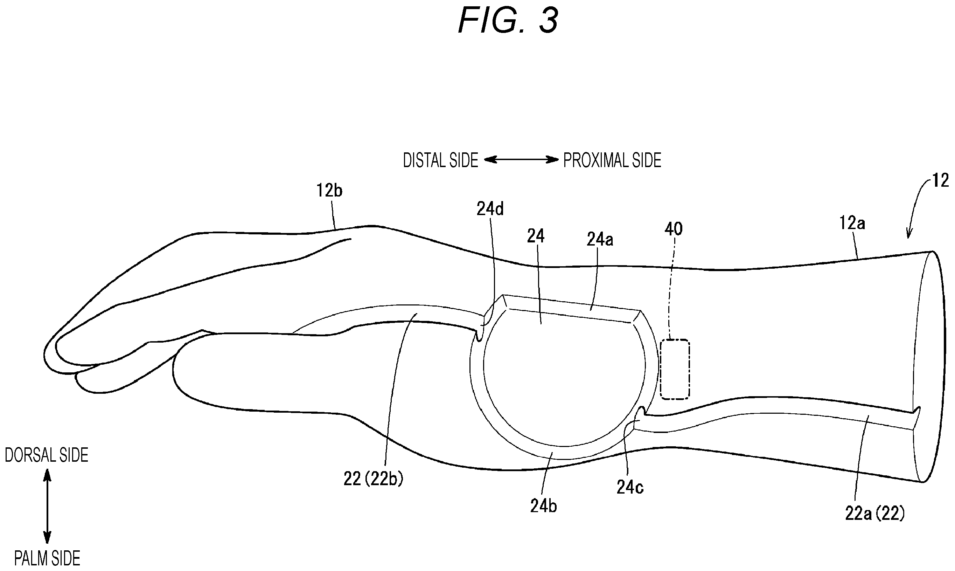

As illustrated in Fig. 3, the recess portion 24 houses and holds the puncture block 14. The recess portion 24 is a recess having a shape obtained by cutting out a portion of the model main body 12 provided with a snuffbox 26 (refer to Fig. 2) and a peripheral portion thereof into a half moon shape in plan view in a case where the model main body 12 is placed with the thumb located on the upper side (hereinbelow, the definition of the plan view is the same as the above definition). The recess portion 24 has a straight dorsal side surface 24a located on the dorsal side of the hand 12b and an arc-like side surface 24b located on the palm side.

The dorsal side surface 24a extends in a straight form in plan view and abuts on a flat portion 14a of the puncture block 14 described below. Since the direction in which the puncture block 14 is fitted into the model main body 12 is determined by providing the dorsal side surface 24a, the puncture block 14 can be positioned in the rotational direction.

A first merging portion 24c is formed on the proximal side of the arc-like side surface 24b. A first portion 22a of the groove portion 22 on the proximal side is connected to the first merging portion 24c. A second merging portion 24d is formed on the distal side of the arc-like side surface 24b. A second portion 22b of the groove portion 22 on the distal side is connected to the second merging portion 24d.

The model main body 12 has a simulated protrusion 40 that simulates a protrusion near the wrist due to the radial styloid process at a portion adjacent to the proximal side of the recess portion 24. The simulated protrusion 40 is arranged adjacent to the proximal side of the snuffbox 26. The simulated protrusion 40 is made of a hard material and buried in the model main body 12, and serves as one of marks for specifying a puncture position.

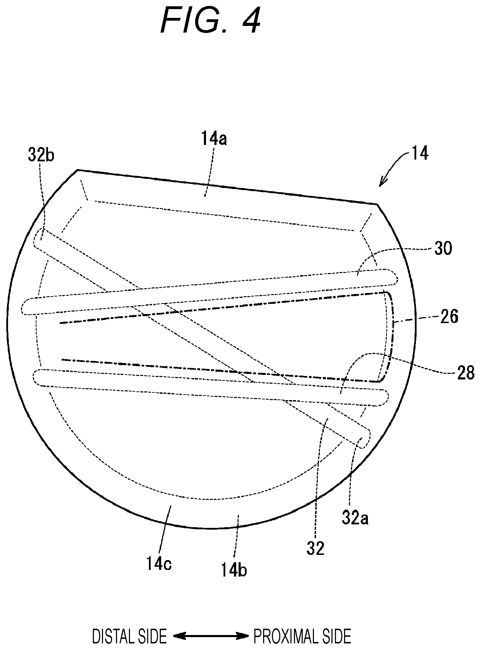

As illustrated in Fig. 4, the puncture block 14 has an arc-like portion 14b and a flat portion 14a, and has a shape obtained by cutting out a cylinder in the height direction so that the bottom surface of the cylinder has a half moon shape. The arc-like portion 14b is a portion having an arc shape in plan view, and corresponds to a side surface of the cylinder after the cylinder is cut out. The flat portion 14a has a straight form in plan view and corresponds to a cut surface in a case where the cylinder is cut out. The puncture block 14 is formed as a solid mass using an elastic resin material that is softer and more elastic than the model main body 12. The puncture block 14 may be formed by cutting out an elastic resin material, or may be molded using a mold having a desired shape. In addition, the puncture block 14 does not need to have a shape obtained by cutting out the cylinder, and may have any shape that facilitates alignment when the puncture block 14 is fitted into the recess portion 24.

The puncture block 14 has a slightly larger shape than the recess portion 24 of the model main body 12. As illustrated in Fig. 2, the puncture block 14 can be fitted into the recess portion 24 while being elastically deformed. When the puncture block 14 is fitted into the recess portion 24, the puncture block 14 completely fills the recess portion 24. An upper end surface 14c of the puncture block 14 has substantially the same shape as the outer surface of the hand 12b of the human body. In other words, the upper end surface 14c of the puncture block 14 constitutes a continuous surface with the model main body 12 without excessively protruding from the surface of the model main body 12.

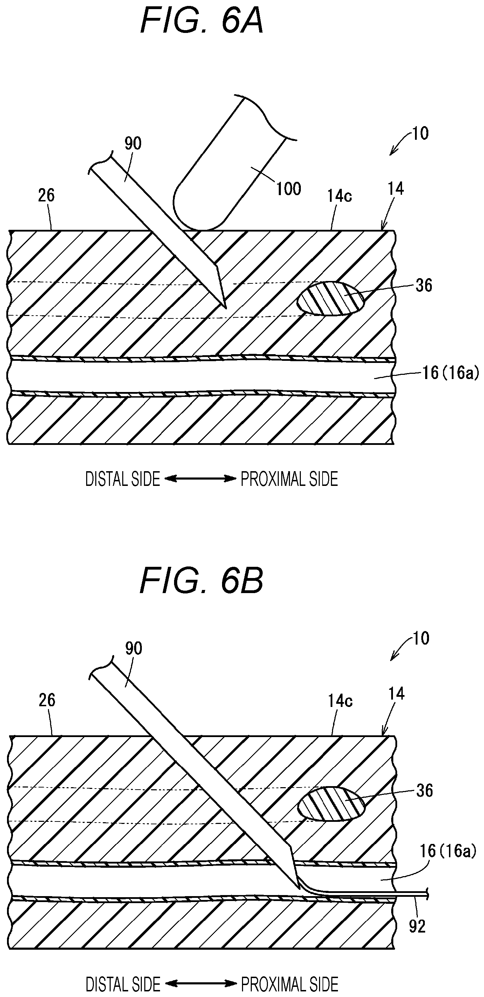

Examples of the material for the puncture block 14 include elastic materials such as urethane elastomer, natural rubber, and silicone rubber. The puncture block 14 is colored in skin color, for example. The puncture block 14 is preferably opaque so that the blood vessel tube 16 (buried portion 16a) buried inside the puncture block 14 cannot be visually recognized. The puncture block 14 preferably has hardness (elasticity) similar to that of subcutaneous tissue or adipose tissue of the human body, for example. Such a puncture block 14 enables a user to feel a similar sense of puncture to that when making a puncture in the target site of the actual human body at the time of puncture with a puncture needle 90 (refer to Fig. 6A).

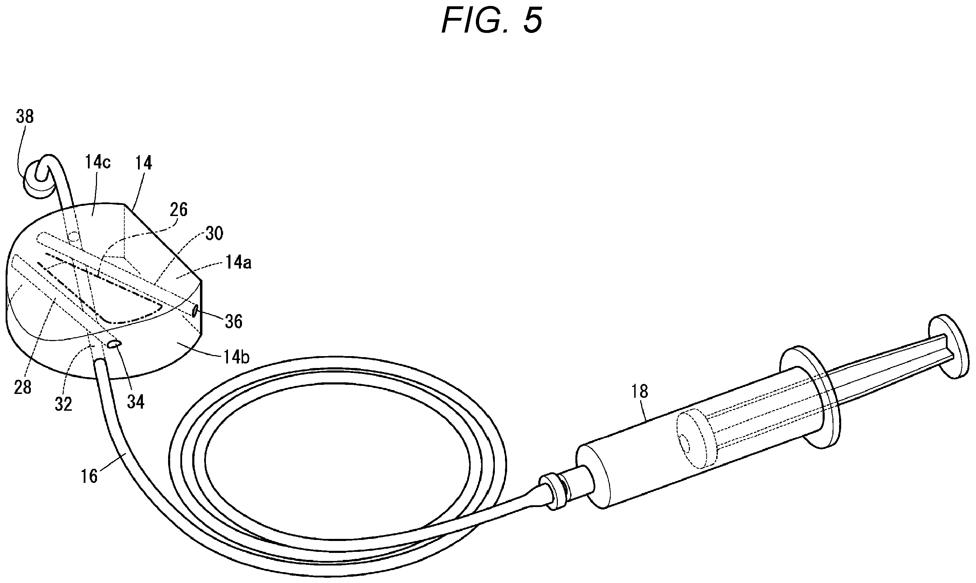

As illustrated in Fig. 4, the puncture block 14 includes a first through hole 28, a second through hole 30, and a third through hole 32 therein. The first through hole 28 is a hole for housing a first simulated extensor tendon 34 (refer to Fig. 5), and is a hole extending substantially parallel to the direction in which the flat portion 14a extends at a certain depth from the upper end surface 14c. The first through hole 28 is arranged at a relatively shallow position of about 2 to 3 mm in depth from the upper end surface 14c of the puncture block 14, for example.

The second through hole 30 is a hole for housing a second simulated extensor tendon 36 (refer to Fig. 5), and is arranged at a position closer to the flat portion 14a than the first through hole 28 (that is, on the dorsal side). The second through hole 30 is located at the same depth as the first through hole 28. The second through hole 30 is inclined with respect to the first through hole 28 so as to approach the first through hole 28 toward the distal side (peripheral side) in plan view.

The third through hole 32 is a hole through which the blood vessel tube 16 is inserted. The blood vessel tube 16 is arranged at a deeper position than the first through hole 28 and the second through hole 30. The third through hole 32 is arranged at a position of about 4 mm in depth from the upper end surface 14c of the puncture block 14, for example. The third through hole 32 is located on the ventral side (palm side) of the first through hole 28 and the second through hole 30 on the proximal side in plan view, but extends so as to approach the flat portion 14a (that is, go to the dorsal side) toward the distal side.

The third through hole 32 extends at a deeper position than the first simulated extensor tendon 34 (first through hole 28) and the second simulated extensor tendon 36 (second through hole 30) in plan view while crossing the running directions of the first simulated extensor tendon 34 and the second simulated extensor tendon 36. When the puncture block 14 is fitted into the recess portion 24, an end portion 32b of the third through hole 32 on the distal side is connected to the second portion 22b (refer to Fig. 3) of the groove portion 22 on the distal side, and an end portion 32a of the third through hole 32 on the proximal side is connected to the first portion 22a (refer to Fig. 3) of the groove portion 22 on the proximal side.

As illustrated in Fig. 5, the first simulated extensor tendon 34, the second simulated extensor tendon 36, and the blood vessel tube 16 are attached to the puncture block 14. The first simulated extensor tendon 34 is inserted in the first through hole 28. The first simulated extensor tendon 34 is an elongated plate-like member imitating the extensor pollicis brevis tendon (refer to Fig. 1) of the human body. The first simulated extensor tendon 34 is formed to have a length that avoids protrusion from the puncture block 14.

The first simulated extensor tendon 34 is made of a hard resin member and has hardness that makes it difficult to make a puncture with the puncture needle 90. The first simulated extensor tendon 34 has, in the cross section thereof, a raised shape toward the arc-like upper surface side of the puncture block 14. The puncture block 14 is configured to enable the raised shape of the first simulated extensor tendon 34 to be easily felt when the user touches the upper end surface 14c.

The second simulated extensor tendon 36 is an elongated plate-like member imitating the extensor pollicis longus tendon of the human body. The second simulated extensor tendon 36 is inserted in the second through hole 30 of the puncture block 14. The second simulated extensor tendon 36 is made of an elongated plate-like resin member similar to the first simulated extensor tendon 34. The second simulated extensor tendon 36 is formed to have a length that avoids protrusion to the outside of the puncture block 14. In the puncture block 14, the second simulated extensor tendon 36 can also be easily felt on the upper end surface 14c. The simulated snuffbox 26 is formed between the first simulated extensor tendon 34 and the second simulated extensor tendon 36.

The blood vessel tube 16 is a member imitating the radial artery of the human body. The blood vessel tube 16 is made of a tube having elasticity such as rubber, silicone resin, or urethane elastomer. The blood vessel tube 16 is made of a transparent or translucent material so that accidental insertion of a guide wire 92 can be checked, and the inside of the tube can be visually recognized. The blood vessel tube 16 of the present embodiment preferably has a similar diameter to that of the radial artery near the snuffbox 26.

As for the dimensions of the blood vessel tube 16, for example, a tube having an inside diameter of 1.8 mm and an outside diameter of 3.2 mm or a tube having an inside diameter of 2.0 mm and an outside diameter of 3.5 mm can be used. The blood vessel tube 16 is slidably inserted in the third through hole 32. In such a blood vessel tube 16, in a case where a puncture hole is formed by a technique practice, by pulling the blood vessel tube 16 out of the puncture block 14 and cutting and removing a portion where the puncture hole is formed, a portion of the blood vessel tube 16 where the puncture hole is not formed can be arranged in the puncture block 14. Therefore, it is possible to quickly move onto the next practice. In a case where the practice is performed a plurality of times, the blood vessel tube 16 is preferably long enough because the frequency of replacement of the blood vessel tube 16 can be decreased.

A sealing cap 38 is connected to the end portion of the blood vessel tube 16 on the distal side, and a syringe 18 is connected to the end portion of the blood vessel tube 16 on the proximal side. The inside of the blood vessel tube 16 is filled with a liquid imitating blood. The liquid is, for example, water colored in red. The sealing cap 38 seals the distal end of the blood vessel tube 16. When pumping is performed using the syringe 18 by manual operation of an assistant who assists the practice, a pressure change corresponding to pulsation can be generated in the blood vessel tube 16. When pumping is performed using the syringe 18, a trainee can feel the pulsation of the blood vessel tube 16 on the upper end surface 14c of the puncture block 14. Since the distal end of the blood vessel tube 16 is sealed by the sealing cap 38, a pressure change can be generated in the blood vessel tube 16 only by lightly pressing the pusher of the syringe 18. Note that the syringe 18 can be replaced with another pressurizing means such as a pump for generating pulsation.

The puncture block 14 illustrated in Fig. 5 is fitted into the recess portion 24 as illustrated in Fig. 2 when performing practice. The blood vessel tube 16 is inserted in the groove portion 22 of the model main body 12. The groove portion 22 is formed to have a width of, for example, about 2 mm, which is smaller than the outside diameter of the blood vessel tube 16. Therefore, the blood vessel tube 16 is held by the groove portion 22 in a stable manner. In addition, with such a configuration of the groove portion 22 and the blood vessel tube 16, when pumping is performed using the syringe 18, the pulsation is restricted at the blood vessel tube 16 (visible portion 16b) inserted in the groove portion 22 since the visible portion 16b is tightly held by the groove portion 22 but can efficiently be generated at the blood vessel tube 16 (buried portion 16a) buried in the puncture block 14.

As illustrated in Fig. 2, the model main body 12 is held by the table 20. The table 20 has a housing recess portion 20a that houses a part of the lower side of the model main body 12. The housing recess portion 20a is provided with an engagement structure that engages with the model main body 12. A lower surface 20b of the table 20 is flat. The table 20 is placed on a flat portion such as a desk to support the model main body 12 in a stable manner.

The technique simulator 10 described above is used as follows.

The technique simulator 10 can be used, for example, for practice of puncture by an echo guide method using an echo device (ultrasonic image diagnostic device) (refer to Fig. 6A). The technique simulator 10 can also be used for practice of puncture without using an echo device. In the following description, an example using an echo device will be described.

During practice using the technique simulator 10 illustrated in Fig. 2, pumping with the syringe 18 is performed by the assistant. The trainee checks the positions of the first simulated extensor tendon 34 and the second simulated extensor tendon 36 by touching the simulated protrusion 40 and the puncture block 14, and checks the position of the snuffbox 26, which is the puncture position.

Subsequently, the trainee moves a probe 100 of the echo device in various directions on the upper end surface 14c of the puncture block 14 to perform an operation of observing the inside of the puncture block 14. As a result, the trainee can grasp the positional relationship among the first simulated extensor tendon 34, the second simulated extensor tendon 36, and the blood vessel tube 16.

Subsequently, the probe 100 is placed on the snuffbox 26. The probe 100 is arranged such that its long axis is orthogonal to the extending direction of the blood vessel tube 16. Then, as illustrated in Fig. 6A, the puncture needle 90 (for example, the thickness is 20 G) is arranged in a direction orthogonal to the long axis of the probe 100. The puncture needle 90 is introduced from the distal side toward the proximal side along the extending direction of the blood vessel tube 16. The puncture with the puncture needle 90 is performed while checking the position of the needle tip of the puncture needle 90 using the echo device.

After the puncture needle 90 is inserted into the blood vessel tube 16, the guide wire 92 is inserted into the blood vessel tube 16 as illustrated in Fig. 6B. In a case where the blood vessel tube 16 is correctly punctured with the puncture needle 90, the guide wire 92 travels through the lumen of the blood vessel tube 16. Therefore, it is possible to confirm that the guide wire 92 has been inserted into the blood vessel tube 16 without straying by visually recognizing the blood vessel tube 16 (visible portion 16b) in the groove portion 22. In the human body, the radial artery near the snuffbox has a branch portion to a thin blood vessel. Therefore, in order to avoid accidental insertion into the thin blood vessel, an operation of moving the guide wire 92 forward while rotating the guide wire 92 is required.

In the technique simulator 10 of the present embodiment, by checking the state of the guide wire 92 by visually recognizing the blood vessel tube 16 exposed from the opening portion of the groove portion 22, one can easily visually recognize whether or not the operation of moving the guide wire 92 forward while rotating the guide wire 92 is being performed appropriately.

At this time, the puncture practice using the technique simulator 10 is completed. If necessary, the above practice may be followed by practice of sheath insertion and catheter insertion.

By repeating the above practice, a puncture hole may be formed in the blood vessel tube 16, and the liquid inside the blood vessel tube 16 may leak into the third through hole 32 or the inside of the puncture block 14 through the puncture hole. To deal with it, if necessary, before performing the next practice, the puncture block 14 may be removed from the model main body 12, the blood vessel tube 16 in the puncture block 14 may be pulled out to the distal side, the portion of the blood vessel tube 16 where the puncture hole is formed may be cut, and the cut portion may be sealed with the sealing cap 38. Thereafter, by attaching the puncture block 14 and the blood vessel tube 16 to the model main body 12 again, one can move onto the next practice. In the technique simulator 10 of the present embodiment, one can move onto the next practice without replacing the entire blood vessel tube 16, and can easily repeat the practice of the distal radial artery approach with less preparation work.

### Second Embodiment

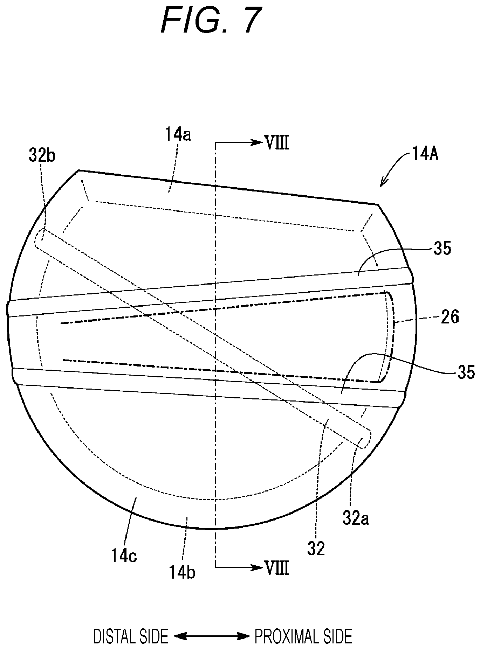

The present embodiment relates to a modification example of the puncture block 14 (refer to Fig. 4) of the technique simulator 10. As illustrated in Fig. 7, a puncture block 14A of the present embodiment has a half moon shape obtained by cutting out a side portion of a cylinder. The puncture block 14A has similar shape and dimensions to those of the puncture block 14. The puncture block 14A is made of a similar elastic resin material to that of the puncture block 14.

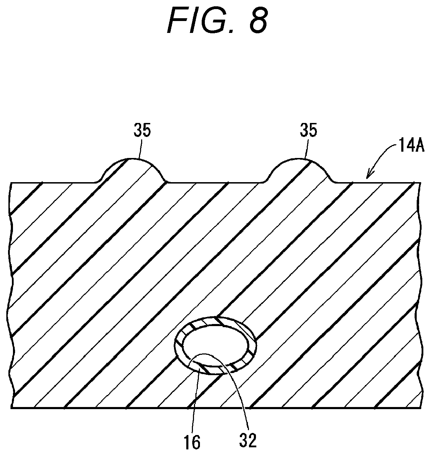

As illustrated in Fig. 8, the puncture block 14A includes only the third through hole 32 therein, and the first through hole 28 and the second through hole 30 (refer to Figs. 4 and 5) are omitted. The puncture block 14A does not have the first simulated extensor tendon 34 and the second simulated extensor tendon 36 (refer to Fig. 5). The puncture block 14A has two myoid protrusions 35 imitating extensor tendons on the surface of the puncture block 14A. The myoid protrusion 35 is a structure that imitates the raised shape of the extensor tendon of the hand, and can notify the user of the position of the extensor tendon. The puncture block 14A allows the user to recognize the positions of the extensor tendons even without the first simulated extensor tendon 34 and the second simulated extensor tendon 36, and allows the user to grasp an appropriate puncture position.

The third through hole 32 is a hole through which the blood vessel tube 16 is inserted. The position and shape of the third through hole 32 of the puncture block 14A are similar to the position and shape of the third through hole 32 of the puncture block 14. In addition, the configuration of the blood vessel tube 16 of the puncture block 14A is similar to that of the blood vessel tube 16 of the puncture block 14.

The puncture block 14A of the present embodiment is configured as described above. Since the puncture block 14A has the myoid protrusions 35 protruding so as to be raised on the surface, it is possible to allow the user to grasp an appropriate puncture position while simplifying the structure. The technique training can also be performed similarly to the case of the first embodiment. In addition, the manufacturing process for the puncture block 14A can be simplified by eliminating the first simulated extensor tendon 34 and the second simulated extensor tendon 36. Furthermore, the puncture block 14A can dispense with replacement work of the simulated extensor tendon, and can save labor for preparation work.

## Claims

1. A technique simulator (10) for training in puncture of a distal radial artery of a human body with a medical instrument, the technique simulator (10) comprising:
a model main body (12) which imitates an appearance of a hand (12b) and a forearm (12a) of the human body;
a recess portion (24) which is obtained by cutting out in a recessed shape a part of a dorsal portion of the hand (12b), including a snuffbox, of the model main body (12);
a groove portion (22) which extends to a proximal side from the recess portion (24) of the model main body (12);
a puncture block (14) which is fitted into the recess portion (24) to fill the recess portion (24); and
a blood vessel tube (16) a part of which is inserted in an inside of the puncture block (14) and another part of which is inserted in the groove portion (22),
**characterized in that** the puncture block (14) includes myoid structures that notify a user of positions of two extensor tendons of the hand (12b) of the human body,
the groove portion (22) is opened outward and enables an inside of the blood vessel tube (16) to be visually recognized from an outside, and
the blood vessel tube (16) extends at a deeper position than two simulated extensor tendons (34, 36) imitating the two extensor tendons of the hand of the human body in the puncture block (14) while crossing the two simulated extensor tendons (34, 36).

2. The technique simulator (10) according to claim 1, comprising:
a syringe (18) which is connected to an end portion of the blood vessel tube (16) on the proximal side and gives pulsation to a liquid filled inside the blood vessel tube (16).

3. The technique simulator (10) according to claim 2, wherein a width of the groove portion (22) has a smaller dimension than an outside diameter of the blood vessel tube (16), and avoids expansion of the blood vessel tube (16) caused by the pulsation by the syringe (18).

4. The technique simulator (10) according to claim 1,
wherein the blood vessel tube (16) extends in the puncture block (14) so as to cross the two myoid structures.

5. The technique simulator (10) according to claim 4,
wherein the two myoid structures are arranged to penetrate the puncture block and include the two simulated extensor tendons imitating extensor tendons of the human body.

6. The technique simulator (10) according to claim 4, wherein the two myoid structures include two myoid protrusions (35) protruding from a surface of the puncture block (14), and the blood vessel tube (16) extends in the puncture block (14) so as to cross the two myoid protrusions (35).

7. The technique simulator (10) according to claim 1, wherein the blood vessel tube (16) includes a flexible tube and slidably inserted through the puncture block (14).

8. The technique simulator (10) according to claim 1, wherein the puncture block (14) is made of an opaque elastic material that is softer and more elastic than the model main body (12).

9. The technique simulator (10) according to claim 1, wherein the recess portion (24) and the puncture block (14) each have a half moon shape obtained by cutting out a part of a circular shape in plan view.

10. The technique simulator (10) according to claim 1, wherein the model main body (12) includes a simulated protrusion (10) protruding from a wrist site to simulate a protrusion of the hand (12b) due to a radial styloid process.

11. The technique simulator (10) according to any one of claims 1 to 10, comprising:
a table (20) which holds the model main body (12).

12. A technique training method using the technique simulator (10) according to any one of claims 1 to 11, the technique training method comprising:
a step of checking a position of the blood vessel tube (16) inside the puncture block (14);
a step of puncturing the blood vessel tube (16) with a puncture needle (90) by introducing the puncture needle (90) into a surface of the puncture block (14); and
a step of inserting a guide wire (92) into the blood vessel tube (16) and moving the guide wire (92) forward inside the blood vessel tube (16) arranged in the groove portion (22).

## Patentansprüche

1. Technik-Simulator (10) zum Üben einer Punktion einer distalen Radialarterie eines menschlichen Körpers mit einem medizinischen Instrument, wobei der Technik-Simulator (10) umfasst:
einen Modellhauptkörper (12), der ein Erscheinungsbild einer Hand (12b) und eines Unterarms (12a) des menschlichen Körpers nachahmt;
einen Vertiefungsabschnitt (24), der durch das Ausschneiden eines dorsalen Abschnitts der Hand (12b) des Modellhauptkörpers (12), der eine Tabatière aufweist, in Form einer Vertiefung erhalten wird;
einen Nutabschnitt (22), der sich von dem Vertiefungsabschnitt (24) des Modellhauptkörpers (12) zu einer proximalen Seite erstreckt;
einen Punktionsblock (14), der in den Vertiefungsabschnitt (24) eingepasst ist, um den Vertiefungsabschnitt (24) auszufüllen; und
einen Blutgefäßschlauch (16), von dem ein Teil in ein Inneres des Punktionsblocks (14) und von dem ein anderer Teil in den Nutabschnitt (22) eingesetzt ist,
**dadurch gekennzeichnet, dass**
der Punktionsblock (14) myoide Strukturen aufweist, die einem Benutzer die Positionen von zwei Strecksehnen der Hand (12b) des menschlichen Körpers anzeigen,
der Nutabschnitt (22) nach außen geöffnet ist und es ermöglicht, ein Inneres des Blutgefäßschlauchs (16) von außen visuell zu erkennen, und
der Blutgefäßschlauch (16) sich an einer tieferen Position erstreckt als zwei simulierte Strecksehnen (34, 36), die die beiden Strecksehnen der Hand des menschlichen Körpers in dem Punktionsblock (14) nachbilden, während er die beiden simulierten Strecksehnen (34, 36) kreuzt.

2. Technik-Simulator (10) nach Anspruch 1, umfassend:
eine Spritze (18), die an einen Endabschnitt des Blutgefäßschlauchs (16) auf der proximalen Seite angeschlossen ist und eine Pulsation an eine in das Innere des Blutgefäßschlauchs (16) gefüllte Flüssigkeit abgibt.

3. Technik-Simulator (10) nach Anspruch 2, wobei eine Breite des Nutabschnitts (22) ein geringeres Ausmaß als ein Außendurchmesser des Blutgefäßschlauchs (16) hat und eine durch die Pulsation durch die Spritze (18) verursachte Ausdehnung des Blutgefäßschlauchs (16) verhindert.

4. Technik-Simulator (10) nach Anspruch 1,
wobei sich der Blutgefäßschlauch (16) in dem Punktionsblock (14) so erstreckt, dass er die beiden myoiden Strukturen kreuzt.

5. Technik-Simulator (10) nach Anspruch 4,
wobei die beiden myoiden Strukturen angeordnet sind, um den Punktionsblock zu durchdringen, und die beiden simulierten Strecksehnen aufweisen, die die Strecksehnen des menschlichen Körpers nachahmen.

6. Technik-Simulator (10) nach Anspruch 4, wobei die beiden myoiden Strukturen zwei myoide Vorsprünge (35) aufweisen, die aus einer Oberfläche des Punktionsblocks (14) herausragen, und sich der Blutgefäßschlauch (16) in dem Punktionsblock (14) so erstreckt, dass er die beiden myoiden Vorwölbungen (35) kreuzt.

7. Technik-Simulator (10) nach Anspruch 1, wobei der Blutgefäßschlauch (16) einen flexiblen und verschiebbar durch den Punktionsblock (14) eingeführten Schlauch aufweist.

8. Technik-Simulator (10) nach Anspruch 1, wobei der Punktionsblock (14) aus einem undurchsichtigen elastischen Material gemacht ist, das weicher und elastischer ist als der Modellhauptkörper (12).

9. Technik-Simulator (10) nach Anspruch 1, wobei der Vertiefungsabschnitt (24) und der Punktionsblock (14) jeweils eine Halbmondform haben, die durch Ausschneiden eines Teils einer Kreisform in der Draufsicht erhalten wird.

10. Technik-Simulator (10) nach Anspruch 1, wobei der Modellhauptkörper (12) einen simulierten Vorsprung (10) aufweist, der aus einer Handgelenkstelle hervorragt, um einen Vorsprung der Hand (12b) aufgrund eines Griffelfortsatzes der Speiche zu simulieren.

11. Technik-Simulator (10) nach einem der Ansprüche 1 bis 10, umfassend:
einen Tisch (20), der den Modellhauptkörper (12) hält.

12. Ein Technik-Übungsverfahren unter Verwendung des Technik-Simulators (10) nach einem der Ansprüche 1 bis 11, wobei das Technik-Übungsverfahren umfasst:
einen Schritt eines Überprüfens einer Position des Blutgefäßschlauchs (16) innerhalb des Punktionsblocks (14);
einen Schritt eines Punktierens des Blutgefäßschlauchs (16) mit einer Punktionsnadel (90) durch Einführen der Punktionsnadel (90) in eine Oberfläche des Punktionsblocks (14); und
einen Schritt eines Einführens eines Führungsdrahts (92) in den Blutgefäßschlauch (16) und eines Vorwärtsbewegens des Führungsdrahts (92) innerhalb des in dem Nutabschnitt (22) angeordneten Blutgefäßschlauchs (16).

## Revendications

1. Simulateur de technique (10) pour l'entraînement à la ponction d'une artère radiale distale d'un corps humain avec un instrument médical, le simulateur de technique (10) comprenant :
un corps principal de modèle (12) qui imite une apparence d'une main (12b) et d'un avant-bras (12a) du corps humain ;
une partie en creux (24) obtenue en découpant en forme creusée une partie d'une zone dorsale de la main (12b), comportant une tabatière anatomique, du corps principal de modèle (12) ;
une partie de rainure (22) qui s'étend vers un côté proximal depuis la partie en creux (24) du corps principal de modèle (12) ;
un bloc de ponction (14) qui est emboîté dans la partie en creux (24) pour remplir la partie en creux (24) ; et
un tube vasculaire de sang (16) dont une partie est insérée dans un intérieur du bloc de ponction (14) et dont une autre partie est insérée dans la partie de rainure (22),
**caractérisé en ce que**
le bloc de ponction (14) comporte des structures myoïdes qui indiquent à un utilisateur les positions de deux tendons extenseurs de la main (12b) du corps humain,
la partie de rainure (22) est ouverte vers l'extérieur et permet à un intérieur du tube vasculaire de sang (16) d'être reconnu visuellement depuis un extérieur, et
le tube vasculaire de sang (16) s'étend à une position plus profonde que deux tendons extenseurs simulés (34, 36) imitant les deux tendons extenseurs de la main du corps humain dans le bloc de ponction (14) tout en croisant les deux tendons extenseurs simulés (34, 36).

2. Simulateur de technique (10) selon la revendication 1, comprenant :
une seringue (18) qui est reliée à une partie d'extrémité du tube vasculaire de sang (16) au côté proximal et qui donne une pulsation à un liquide rempli à l'intérieur du tube vasculaire de sang (16).

3. Simulateur de technique (10) selon la revendication 2, dans lequel une largeur de la partie de rainure (22) a une dimension plus petite qu'un diamètre extérieur du tube vasculaire de sang (16), et évite l'expansion du tube vasculaire de sang (16) causée par la pulsation effectuée par la seringue (18).

4. Simulateur de technique (10) selon la revendication 1,
dans lequel le tube vasculaire de sang (16) s'étend dans le bloc de ponction (14) de manière à croiser les deux structures myoïdes.

5. Simulateur de technique (10) selon la revendication 4,
dans lequel les deux structures myoïdes sont disposées pour pénétrer le bloc de ponction et comportent les deux tendons extenseurs simulés imitant des tendons extenseurs du corps humain.

6. Simulateur de technique (10) selon la revendication 4, dans lequel les deux structures myoïdes comportent deux protubérances myoïdes (35) faisant saillie depuis une surface du bloc de ponction (14), et le tube vasculaire de sang (16) s'étend dans le bloc de ponction (14) de manière à croiser les deux protubérances myoïdes (35).

7. Simulateur de technique (10) selon la revendication 1, dans lequel le tube vasculaire de sang (16) comporte un tube flexible et est inséré de manière coulissante à travers le bloc de ponction (14).

8. Simulateur de technique (10) selon la revendication 1, dans lequel le bloc de ponction (14) est fait d'un matériau élastique opaque qui est plus souple et plus élastique que le corps principal du modèle (12).

9. Simulateur de technique (10) selon la revendication 1, dans lequel la partie en creux (24) et le bloc de ponction (14) ont chacun une forme de demi-lune obtenue en découpant une partie d'une forme circulaire dans une vue en plan.

10. Simulateur de technique (10) selon la revendication 1, dans lequel le corps principal de modèle (12) comporte une protubérance simulée (10) faisant saillie depuis un site de poignet pour simuler une protubérance de la main (12b) grâce à un processus styloïde du radius.

11. Simulateur de technique (10) selon l'une quelconque des revendications 1 à 10, comprenant :
une table (20) qui maintient le corps principal de modèle (12).

12. Procédé d'entraînement de technique utilisant le simulateur de technique (10) selon l'une quelconque des revendications 1 à 11, le procédé d'entraînement de technique comprenant :
une étape consistant à vérifier une position du tube vasculaire de sang (16) à l'intérieur du bloc de ponction (14) ;
une étape consistant à ponctionner le tube vasculaire de sang (16) avec une aiguille de ponction (90) en introduisant l'aiguille de ponction (90) dans une surface du bloc de ponction (14) ; et
une étape consistant à insérer un fil-guide (92) dans le tube vasculaire de sang (16) et à déplacer le fil-guide (92) vers l'avant à l'intérieur du tube vasculaire de sang (16) disposé dans la partie de rainure (22).
